# EUROPEAN PATENT APPLICATION

(11) **EP 3 888 461 A1**
(43) Date of publication of application: **06.10.2021**
(21) Application number: 20168105.3
(22) Date of filing: 03.04.2020
(51) Int. Cl.: A01N 41/10, A01P 13/02, A01N 25/32, A01N 25/22, A01N 25/04

(54) **NON-AQUEOUS DISPERSIONS COMPRISING INHIBITORS OF HYDROXYPHENYLPYRUVATE-DIOXYGENASE AND CITRIC ACID**

(71) Applicant: Bayer AG, 51373 Leverkusen (DE)
(72) Inventor: The designation of the inventor has not yet been filed
(74) Representative: BIP Patents

(57) **Abstract**

The present invention relates to the technical field of plant protection formulations. In particular, the invention relates to non-aqueous single liquid-phase dispersions comprising herbicidal active substances which are known as hydroxyphenylpyruvate dioxygenase (HPPD) inhibitors, especially triketones, and more particular tembotrione, in combination with an adjuvant, citric acid (in the following, if not stated otherwise, citric acid refers to anhydrous citric acid), and at least one synthetic amorphous silica-based rheology modifier, wherein said modifier is most preferred a mixture of a hydrophilic and a hydrophobic synthetic amorphous silica-based rheology modifier, which are useful for the selective control of weeds and weed grasses in important plant crops

## Description

The present invention relates to the technical field of plant protection formulations. In particular, the invention relates to non-aqueous single liquid-phase dispersions comprising herbicidal active substances which are known as hydroxyphenylpyruvate dioxygenase (HPPD) inhibitors, especially triketones, and more particular tembotrione, in combination with an adjuvant, citric acid (in the following, if not stated otherwise, citric acid refers to anhydrous citric acid), and at least one synthetic amorphous silica-based rheology modifier, wherein said modifier is most preferred a mixture of a hydrophilic and a hydrophobic synthetic amorphous silica-based rheology modifier, which are useful for the selective control of weeds and weed grasses in important plant crops.
The invention also comprises a method of controlling undesirable vegetation in the presence of a crop, particularly a corn crop, by applying to the locus of the crop or undesired vegetation a herbicidal composition comprising a herbicidally effective amount of a herbicide selected from the class of HPPD inhibitors, in particular tembotrione, an adjuvant, anhydrous citric acid and at least one synthetic amorphous silica-based rheology modifier, wherein said modifier is most preferred a mixture of a hydrophilic and a hydrophobic synthetic amorphous silica-based rheology modifier, optionally in mixture with additional herbicides or safeners.

Herbicidal active substances are conventionally not employed in their pure form. Depending on the field of application and the type of application, and on physical, chemical and biological parameters, the active substances are employed as active substance formulation as a mixture with customary adjuvants and additives. The combinations with further active substances for widening the spectrum of action and/or for protecting the crop plants (for example by safeners, antidotes) are also known.

Hydroxyphenylpyruvate dioxygenase inhibitors are known as herbicides. Among these, benzobicyclon, isoxaflutole, mesotrione, pyrasulfotole, pyrazolynate, sulcotrione, tefuryltrione, tembotrione and topramezone are commercially available. Suspension concentrates or water-dispersible granules are already known as formulations of these active substances, see, for example, "The Pesticide Manual" 18th edition (2003), The British Crop Protection Council. EP 1 392 117 B1 discloses formulations of various hydroxyphenylpyruvate dioxygenase inhibitors in combination with certain fertilizers. WO 2008/135854-A2 discloses aqueous oil dispersions of 2-benzoyl-1,3-cyclohexanediones.

There are several patent applications which describe HPPD inhibitors in non-aqueous solutions.

CN103583520A1 discloses an oil suspension comprising mesotrione, surfactant, thickening agent, vegetable oil-based solvent and a stabilizing agent, particularly citric acid.

WO2002091831 discloses the use of benzoylcyclohexanediones which herbicidal performance is markedly improved using a combination of these compounds, together with a fertilizer containing nitrogen, especially ammonium sulfate and one or more adjuvants.
EP2193712A1discloses the use of dispersions of HPPD containing ammonium salts in an oil carrier with the use of synthetic amorphous silica-based thickeners, specifically hydrophobic Aerosil® R 202. WO2008135854A2 discloses HPPD non-aqueous suspensions using acids and a limited amount of water to achieve chemical stabilization.
WO2008142391A1 discloses the use of a non-aqueous suspension of ALS and HPPD inhibitors, using acids stabilizers and synthetic amorphous silica-based thickeners, specifically hydrophobic Aerosil® 200. WO2016180857 discloses a synergistic composition containing a herbicide, organic acid and a surfactant, whereas the herbicide is contained between 0,1 and 0,25% and the ratio herbicide:organic acid and surfactant is 1.1:1.
The use of HPPD inhibitors as tembotrione and mesotrione and the effect of ammonium sulfate use on enhancing herbicidal activity is disclosed in DLG-Mitteilungen 2/2017, 60-61 as well as WO2002091831.

Nitrogen is well known in the art as a fertilizer and is described in Farm Chemicals Handbook, 1988 Edition on pages B48 and B49. Commercially available nitrogen containing fertilizers include ammonium nitrate, ammonium sulfate, urea, nitrogen solutions (which include urea ammonium nitrate), potassium nitrate, and combinations thereof.

In general, formulations of herbicidal active substances should have high chemical and physical stability, good application properties and user friendliness and a broad biological activity combined with high selectivity.

Depending on the intended use, the user demands formulations which are simple to handle and storage-stable. However, the formulations known from the prior art are not always satisfactory for these purposes and are frequently associated with disadvantages in practice. For example, the herbicidal activity of the known compounds is not always adequate, or if the herbicidal activity is adequate undesired damage to the useful plants is observed. Most frequently, the use of a non-aqueous solution formulation leads to bulk physical stability problems as a consequence of the rheological system used, leading to the formation of a hard-to-dissolve sediment and severe phase separation, and chemical instability of the used HPPD inhibitor.

When dispersed in a liquid carrier, even a carrier comprising a nonaqueous solvent, triketone herbicides may be susceptible to decomposition. Also, crystal growth can occur during storage of concentrated liquid formulations in which active ingredients are dispersed, and suspended active ingredients are prone to settling out, so that obtaining stable liquid formulations is challenging.

Therefore, the use of the HPPD inhibitors as known from the prior art is, frequently associated with disadvantages in practice. For example, formulation stability is not always adequate, showing over storage the formation of a hard sediment difficult to dissolve, undesired damage to the useful plants is observed or the herbicidal activity of the known compounds is not adequate. In addition, the stability of the HPPD inhibitor upon high temperature storage conditions is not insufficient or impaired. Most particularly, HPPD inhibitors require a nitrogen source in form of an ammonium salt to unveil biological activity, which however is not physically compatible with the use of an oil-based carrier in a non-aqueous composition causing precipitation, clogging and hard sediment formation. Further, due to their respective intrinsic properties, HPPD-inhibiting herbicides are sensitive to chemical breakdown, particularly in liquid formulations.

Hence, it was an object of the instant invention to provide agrochemical formulations of HPPD inhibitors, in particular of tembotrione, which do not show the above discussed disadvantages.
In particular, it was an object of the instant invention to provide formulations with improved storage (improved / less sedimentation / absence of hard sediment) and chemical stability of the active ingredient, as well as good herbicidal activity.

Specifically, it was object of the present invention to prepare a chemical and physically stable formulation with focus on a homogenous, flowable formulation with the absence of a hard sediment (not redispersible) at the bottom of the flask. The ultimate goal was to produce a formulation that could be up scalable and would be suitable for production and sales and be suited for application as a homogenous diluted spray solution by the customer.

Surprisingly, it has now been found that anhydrous citric acid can significantly chemically stabilize these herbicides in herbicidal compositions. Hence another object of the instant invention is the use of anhydrous citric acid for the chemical stabilization of HPPD inhibitors in agrochemical formulations, specifically tembotrione.
It has been unexpectedly found that pre-mix formulations of the above ingredients A) to G) provide a significant physical and bulk stability improvement, especially avoiding the formation of a hard sediment. The formulations of the present invention provide an improved level of weed control and crop selectivity compared to tank mixtures, and accordingly the pre-mix formulations form a preferred aspect of the present invention. The ability to provide these herbicides as a stable "ready-mix" composition has several significant advantages. In addition to providing improved chemical stability, the herbicidal compositions of the present invention also provide comparable or improved biological function compared to tank-mixed compositions, both in terms of efficacy and selectivity.

Thus, it was an object of the present invention to provide formulations for active substances from the HPPD inhibitors series which do not have the abovementioned disadvantages. More specifically, it was object of the present invention to provide a formulation with improved physical stability (improved/no sedimentation/no hard sediment formation) and herbicidal activity. Even more specifically, it was object of the present invention to prepare a chemical and physically stable formulation with focus on a homogenous, flowable formulation with the absence of a hard sediment at the bottom of the flask. The ultimate goal was to produce a formulation that could be up scalable and would be suitable for production and sales and be suited for application as a homogenous diluted spray solution by the customer.

This object is achieved by dispersions according to the present invention which, besides HPPD inhibitors, comprise at least one oil from selected from the group of the vegetable and the mineral oils, at least one adjuvant, at least one specific rheological additive and citric acid.

Surprisingly, it has been found that the storage stability of these formulations (both chemical and especially bulk physical stability) is markedly improved by using a combination of tembotrione, together with a specific adjuvant and citric acid in combination with one or more rheological additives, based on a mixture of hydrophobic and hydrophilic synthetic amorphous silica based. In addition, the biological efficacy of such herbicides is at least comparable to those comprising ammonium containing salts as herbicidal activators as known from the prior art.

The herbicidal composition of the present invention can be a "solid" formulation, for example, a water dispersible granule (WG) but is preferably a liquid composition - in particular an "oil dispersion" (OD) especially wherein the herbicide components are present in suspension. In a preferred embodiment the median particle size diameter of the herbicide and the safener in the liquid herbicidal composition is about ten µ(micrometer) or less, as compositions comprising particles of this size have been shown to exhibit improved physical stability.

If not stated otherwise in the present invention, the particle size is determined according to CIPAC (CIPAC = Collaborative International Pesticides Analytical Council; www.cipac.org) method MT 187. The particle size distribution is determined by means of laser diffraction. A representative amount of sample is dispersed in degassed water at ambient temperature (self-saturation of the sample), treated with ultrasound (usually 60 s) and then measured in a device from the Malvern Mastersizer series (Malvern Panalytical). The scattered light is measured at various angles using a multi-element detector and the associated numerical values are recorded. With the help of the Fraunhofer model, the proportion of certain size classes is calculated from the scatter data and from this a volume-weighted particle size distribution is calculated. Usually the d50 or d90 value = active ingredient particle size (50 or 90% of all volume particles) is given. The average particle size denotes the d50 value.

Accordingly, the present invention relates to a single liquid-phase non-aqueous herbicide dispersion comprising:
A) at least one HPPD inhibitor selected from the class of the triketone HPPDs,
B) at least one safener,
C) at least one surfactant,
D) at least one organic poly acid,
E) at least one synthetic amorphous silica-based rheology modifier,
F) one or more vegetable or mineral oils,
G) optionally further formulation auxiliaries (in the following also named inert adjuvants and/or additive).

More specifically, the present invention relates to non-aqueous dispersions comprising
A) at least one herbicidal active substance from the group of the HPPD inhibitors, specifically triketones,
B) at least one safener,
C) at least one surfactant, preferably selected from the group of ethoxylated sorbitan esters or blends thereof with at least 50% ethoxylated sorbitan ester,
D) citric acid, preferably anhydrous citric acid,
E) at least one synthetic amorphous silica-based rheology modifier,
F) one or more vegetable or mineral oils,
G) optionally further formulation auxiliaries.

In the term of the instant invention, safeners are handled and named separately from active ingredients.

In a further preferred embodiment, component E) is a mixture of a hydrophilic and a hydrophobic synthetic amorphous silica-based rheology modifier, wherein the ratio is preferably from 1:0.5 to 1:6, more preferably from 1:1 to 1:5, and most preferably from 1:1 to 1:3.

In another preferred embodiment, the liquid carrier of this composition (component F) provides a single-phase liquid medium in which other components are dissolved or dispersed.

As will be described further, components A) and B), the herbicide and the safener, are suspended as solid particles in the present composition, and accordingly the composition can be regarded as a herbicidal oil dispersion formulation, i.e. a suspension of solid particles of components A) and B) dispersed in F).

Component G) or multiple components may be selected from the group of formulation auxiliaries such as antifoams, evaporation inhibitors, perfumes, colorants, antifreeze agents or preservatives.

In a preferred embodiment, A) is tembotrione.
In another preferred embodiment, B) is isoxadifen-ethyl, further preferred in combination with tembotrione as A).

The ratio of A) : B) is preferably from 10:1 to 1:1, more preferably from 5:1 to 1.5:1, and most preferably from 4:1 to 2:1.

The dispersions according to the invention show outstanding storage stability and an outstanding herbicidal activity. The outstanding storage stability manifests itself in the solid components having only a very low tendency toward formation of a hard sediment on the bottom of the flask and the active substances A) and B) decomposing only to a very small degree, even upon prolonged storage.

If not indicated otherwise, "%" in the instant invention refers to "% by weight". Further, if not otherwise indicated, the sum of the individual ingredients in the composition is 100%.

Preferably, the invention is directed to herbicide compositions comprising by weight of the composition:
A) from 3 to 15%,
B) from 1 to 8%,
C) from 12 to 27%,
D) from 0.5 to 15%,
E) from 0.1 to 7%,
F) from 30 to 80%,
G) from 0 to 5%,

In case G) is present, the lower limit is 0.1% for this component.

Preferably, the dispersions according to the invention comprise
A) from 4 to 12%,
B) from 2 to 6%,
C) from 14 to 23%,
D) from 0.5 to 12.5%,
E) from 2 to 6%,
F) from 50 to 75%,
G) from 0 to 5%,

In case G) is present, the lower limit is 0.1% for this component.

In another embodiment the dispersions according to the present invention preferably comprise:
A) from 4 to 10%, wherein A) is preferably tembotrione,
B) from 2 to 5%, wherein B) is preferably isoxadifen-ethyl,
C) from 15 to 22%, wherein C) is preferably at least one surfactant selected from the group of ethoxylated sorbitan esters or blends thereof with at least 50% ethoxylated sorbitan ester.
D) from 0.5 to 11%, wherein D) is preferably citric acid, more preferably anhydrous citric acid,
E) from 3 to 5%, wherein E) is preferably a synthetic amorphous silica-based rheology modifier most preferred a mixture of a hydrophilic and a hydrophobic synthetic amorphous silica-based rheology modifier,
F) from 55 to 75%, wherein F) is preferably rapeseed oil methyl ester or a mixture of rapeseed oil methyl ester with a mineral oil, preferably in a ratio from 2:1 to 6:1, more preferably 3:1 to 4:1, with a maximum of 15% (based on the total composition) of the mineral oil present and a minimum of 0%.
G) from 0 to 5%,

In case G) and is present, the lower limit is 0.1% for this component.

This invention also relates to a process for preparing said composition, the process comprising milling components A) and B) and D) with E) together in a liquid carrier comprising of components C) and F).

In one embodiment C) comprises preferably at least one surfactant selected from the group of ethoxylated sorbitan esters or blends thereof with at least 50% ethoxylated sorbitan ester and further preferred 2, even more preferred 3 other surfactants C, wherein the surfactant selected from the group of ethoxylated sorbitan esters or blends thereof with at least 50% ethoxylated sorbitan ester at least provides for 50% of C).

The term "single liquid-phase composition" and derivative terms such as "single liquid-phase herbicide composition" refer to compositions consisting of a single liquid phase. The term "single liquid-phase composition" therefore excludes compositions comprising a plurality of liquid phases such as emulsions. The term "single liquid-phase composition" does not exclude compositions comprising one or more solid phases in addition to the single liquid phase, such as suspensions and dispersions of solid particles.

The composition can be regarded as a herbicidal oil dispersion formulation, i.e. a suspension of solid particles of components A) and B) dispersed in oily component F).

The single liquid phase requirement of the present composition precludes the presence of liquid phases in addition to the continuous liquid phase formed by component F). Therefore, while solid particles, such as of components A) and B) can be suspended as a dispersion in the liquid phase formed by component F), liquid droplets of other substances cannot be present, such as in an emulsion, in the liquid phase. Therefore, any water that is present in the composition must be dissolved in the liquid phase formed by component F) or absorbed into particles of solid substances suspended in the liquid phase, but not present as an emulsion. This inherently greatly limits the amount of water that can be present.

The compositions of the present invention contain a maximum of 0.5% water by weight.

### Component A)

Preferably, the composition contains from 3% to 15% of the active ingredient, more preferred from 4% to 12% and most preferred from 4% to 10%.

Component A) is preferably selected from the group of herbicidally active compounds according to formula (I), 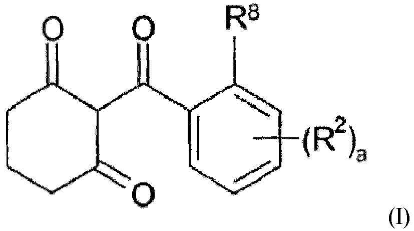 wherein:
R⁸ is selected from the group consisting of halogen, nitro, C₁₋₄ alkyl, C₁₋₄ haloalkyl, C₁₋₆ alkoxy, C₁₋₆ alkoxy-C₁₋₆ alkyl, C₁₋₆ alkoxy-C₂₋₆alkoxy, C₁₋₆ alkoxy-C₂₋₆-alkoxy- C₁₋₆ alkyl, C₁₋₄ haloalkoxy and C₁₋₄ haloalkoxy-C₁₋₄ alkyl.
Preferably, R⁸ is chloro or nitro.
With regard to compounds of formula (I) R² is preferably selected from the group consisting of -SO₂CH₃, CF₃ and 2,2,2 trifluoroethoxymethyl.
Preferred compounds of formula (I) are 2-(2' -nitro-4'-methylsulphonylbenzoyl)-1,3-cyclohexanedione (mesotrione), 2-(2 '-nitro-4 '-methylsulphonyloxybenzoyl)-1,3-cyclohexanedione, 2-(2 '-chloro-4'-methylsulphonylbenzoyl)-1,3-cyclohexanedione (sulcotrione), 2-[2-chloro-4-(methylsuphonyl)-3-(2,2,2-tnfluoroethoxy]methyl]benzoyl]-1,3-cyclohexanedione (tembotrione), 4,4-dimethyl-2-(4-methanesulphonyl-2-nitrobenzoyl)-1,3- cyclohexanedione, 2-(2-chloro-3-ethoxy-4-methanesulphonylbenzoyl)-5-methyl-1,3- cyclohexanedione and 2-(2-chloro-3-ethoxy-4-ethanesulphonylbenzoyl)-5 -methyl-1,3 -cyclohexanedione.
More preferred, the herbicidal active substances are selected from the from the group of the HPPD inhibitors, comprising the triketones, even more preferred from the group comprising benzobicyclon, isoxaflutole, mesotrione, pyrasulfotole, pyrazolynate, sulcotrione, tefuryltrione, tembotrione, topramezone,3-({2-[(2-methoxyethoxy)methyl]-6-(trifluoromethyl)pyridin-3-yl}carbonyl)bicyclo[3.2.1]octane-2,4-dione, Tolpyralate, Fenpyrozone, Tripyrasulfone, Fentrazamide, Pyrasulfotole.
Most preferred compound of formula (I) specifically component A) is tembotrione.

In the present composition, the component A) is typically in the free acid form having the molecular structure depicted as Formula (I), rather than as a salt (e.g., wherein the triketone is deprotonated).

Compounds of formula (I) may exist in a number keto or enolic tautomeric forms. Furthermore, in certain cases the above substituents may contribute to optical isomerism and/or stereoisomerism. All such forms and mixtures are embraced by the present invention.

Some of the HPPD inhibitors have an acidic proton which may be removed by means of a base. It should be understood that reference to the herbicides above also includes, for example, reference to tautomers and agriculturally acceptable salts thereof.

By the term "agriculturally acceptable salts" is meant salts the cations of which are known and accepted in the art for the formation of salts for agricultural or horticultural use. Preferably the salts are watersoluble.

The present invention also includes agronomically acceptable salts that the compounds of Formula (I) may form with amines (for example ammonia, dimethylamine and triethylamine, diethanolamine, triethanolamine, octylamine, morpholine and dioctylmethylamine), alkali metal (eg. sodium and potassium) and alkaline earth metal bases (eg. calcium and magnesium), or quaternary ammonium bases.

Among the alkali metal and alkaline earth metal hydroxides, oxides, alkoxides and hydrogen carbonates and carbonates used as salt formers, emphasis is to be given to the hydroxides, alkoxides, oxides and carbonates of lithium, sodium, potassium, magnesium and calcium, but especially those of sodium, magnesium and calcium. The corresponding trimethylsulfonium salt may also be used.

By the term "metal complexes" is meant compounds wherein R⁴ represents hydrogen (or a tautomer thereof) in which one or more of the oxygen atoms of the 2-benzoyl derivatives of formula (I) act as chelating agents to a metal cation. Examples of such cations include zinc, manganese, cupric, cuprous, ferric, ferrous, titanium and aluminium.

The salts of the HPPD inhibitors which can thus be obtained are also suitable as component A) in the dispersions according to the invention. Examples of suitable bases are ammonia, the hydroxides, carbonates and hydrogen carbonates of zinc, alkali metals and alkaline earth metals such as sodium, potassium, calcium and magnesium, and organic bases of the formula NR¹R²R³ where R¹, R² and R³ are in each case (C₁-C₆)-alkyl, (C₂-C₆)-alkenyl or (C₂-C₆)-alkynyl, and R² and R³ can additionally also be hydrogen. The potassium, sodium and ammonium salts are preferred._The herbicide may also be provided as a metal chelate. Metal ions which may be useful in forming the metal chelate include di- and trivalent transition metal ions such as Cu²⁺, Zn²⁺, Co²⁺, Fe²⁺, Ni²⁺ and Fe³⁺.

Suitable use of the active ingredient as component A) is also in its especially preferred solid forms as crystalline form which may contain one or more polymorphs, mostly preferred the thermodynamically most stable crystalline pure form.

By the term "polymorph" is meant a particular crystal form of a chemical compound that can exist in more than one crystal form in the solid state. A crystal form of a compound contains the constituent molecules arranged in orderly repeating patterns extending in all three spatial dimensions (in contrast, an amorphous solid form has no long-range order in the position of molecules). Different polymorphs of a compound have different arrangements of atoms and or molecules in their crystal structure. When the compound is a biologically active compound, such as an herbicide, the difference in crystal structures can lead to different polymorphs having different chemical, physical and biological properties. Properties which may be affected include crystal shape, density, hardness, color, chemical stability, melting point, hygroscopicity (water solubility), lipophilicity, suspensibility, dissolution rate and biological availability. As such, a specific polymorph may have properties which make it more advantageous in a particular use relative to another polymorph of the same compound: in particular, the physical, chemical and biological properties listed above can have a significant effect on the development of production methods and formulations, the ease with which a compound can be combined in a formulation with other active ingredients and formulation components and the quality and efficacy of plant treatment agents, such as herbicides. It is noted that predicting whether the solid state of a compound may be present as more than one polymorph is not possible and nor is it possible to predict the properties of any of these crystal forms.
In particular, the use of a specific polymorph may allow use of new formulations compared with existing polymorphic/amorphous forms of a compound. This might be advantageous for several reasons. For example, a suspension concentrate (SC) formulation may be preferred over an emulsion concentrate (EC) because the lack of solvent in the SC often means that the formulation is likely to be less phytotoxic than an equivalent EC formulation - however, if the existing form of a compound is not stable in such an SC formulations, polymorphic conversion might occur leading to unwanted crystal growth. Such crystal growth is detrimental because it leads to, for example, thickening and potentially solidification of the formulation during production which can lead to blockages in application equipment, e.g. in spray nozzles in agricultural application machinery. Using a stable polymorphic form would overcome these issues.

### Component B)

The safener as component B) is present in the composition preferably from 1 to 8%, more preferred from 2 to 6%, and most preferred from 2 to 5%.

To avoid unwanted phytotoxic side-effects, it is known to apply herbicides in combination with a safener. Safeners are compounds which, fully or predominantly, prevent the phytotoxic side-effects of herbicides in useful plants.

Safeners are chemical compounds which prevent or reduce damage on useful plants without having a major impact on the herbicidal action of the herbicidal active components of the present compositions towards unwanted plants. They can be applied either before sowings (e.g. on seed treatments, shoots or seedlings) or in the pre-emergence application or post-emergence application of the useful plant. The safeners and the triazine compounds of formula (I) and/or 10 the herbicides B can be applied simultaneously or in succession.

Suitable safeners are e.g. (quinolin-8-oxy)acetic acids, 1-phenyl-5-haloalkyl-1H-1,2,4-triazol-3-carboxylic acids, 1-phenyl-4,5-dihydro-5-alkyl-1H-pyrazol-3,5-dicarboxylic acids, 4,5-dihydro-5,5-diaryl-3-isoxazol carboxylic acids, dichloroacetamides, alpha-oximinophenylacetonitriles, acetophenonoximes, 4,6-dihalo-2-phenylpyrimidines, N-[[4-(aminocarbonyl) phenyl]sulfonyl]-2-15 benzoic amides, 1,8-naphthalic anhydride, 2-halo-4-(haloalkyl)-5-thiazol carboxylic acids, phosphorthiolates and N-alkyl-0-phenylcarbamates and their agriculturally acceptable salts and their agriculturally acceptable derivatives such amides, esters, and thioesters, provided they have an acid group. Examples of preferred safeners are benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro [4.5] decane (MON4660, CAS 71526-07-3), 2,2,5-trimethyl-3-(dichloroacetyl)-1,3-oxazolidine (R-29148, CAS 52836-31-4), metcamifen and BPCMS (CAS 54091-06-4).
Especially preferred safeners are benoxacor, cloquintocet, cyprosulfamide, dichlormid,fenchlorazole, fenclorim, flurazole, fluxofenim, furilazole, isoxadifen, mefenpyr, naphthalic anhydride, oxabetrinil, 4-(dichloroacetyl)-1-oxa-4-azaspiro [4.5] decane (MON4660, CAS 71526-07-3), 2,2,5-trimethyl-3-(dichloroacetyl)-1,3-oxazolidine (R-29148, CAS 52836-31-4) and metcamifen.
Particularly preferred safeners are benoxacor, cloquintocet, cyprosulfamide, dichlormid, fenchlorazole, fenclorim, furilazole, isoxadifen, mefenpyr, naphtalic anhydride, 4-(dichloroace-30 tyl)-1-oxa-4-azaspiro [4.5] decane (MON4660, CAS 71526-07-3), 2,2,5-trimethyl-3-(dichloroacetyl)-1,3-oxazolidine (R-29148, CAS 52836-31-4) and metcamifen.
Particularly as safener is isoxadifen, wherein isoxadifen includes the ethyl ester (isoxadifen-ethyl), which is most preferred.

For reference as to names and known safeners, see, e.g., The Compendium of Pesticide Common Names (http://www.alanwood.net/pesticides/); Farm Chemicals Handbook 2000 volume 86, Meister Publishing Company, 2000; B. Hock, C. Fedtke, R. R. Schmidt, Herbizide [Herbicides], Georg Thieme Verlag, Stuttgart 1995; W. H. Ahrens, Herbicide Handbook, 7th edition, Weed Science Society of America, 1994; and K. K. Hatzios, Herbicide Handbook, Supplement for the 7th edition, Weed Science Society of America, 1998. 2,2,5-Trimethyl-3-(dichloroacetyl)-1,3-oxazolidine [CAS No. 52836-31-4] is also referred to as R-29148. 4-(dichloroacetyl)-1-oxa-4-azaspiro [4.5] decane 10 (CAS No. 71526-07-3) is also referred to as AD-67 and MON 4660.

### Component C)

The surfactant as component C) is present in the composition preferably from 12 to 28%, more preferred from 14 to 23%, and most preferred from 15 to 22%.

The composition can be in the form of concentrates which are diluted prior to use, although ready-to-use compositions can also be made. The final dilution is usually made with water, but can be made instead of, or in addition to, water, with, for example, liquid fertilizers, micronutrients, biological organisms, oil or solvents.

Because the present herbicidal composition is typically first diluted with much greater amount of water in a spray system before application to the undesired vegetation to be controlled, for satisfactory performance the fatty acid ester component F) in the present composition needs to form an oil-in-water emulsion when the composition is diluted with water. Component C) is included to promote forming this emulsion. Therefore, the one or more surfactants in component C) must have an emulsifier property, specifically the ability to promote the formation of oil-in-water emulsions. The one or more surfactants in component C) can also have, in addition, other surfactant utilities (e.g., wetting agent), but they must have significant ability to promote the formation of oil-in-water emulsions to be considered constituents of component C). To form present component C), both anionic and non-ionic surfactants, particularly mixtures of these two general classes, are found to be useful. Anionic surfactants and non-ionic surfactants can be selected based on their reported utility as oil-in-water emulsifiers. Non-ionic surfactants can be also selected based on their HLB (Hydrophile-Lipophile Balance) values. The HLB system or index is well known to those skilled in the art. HLB values for non-ionic surfactants are readily available in textbooks (e.g., A. W. Adamson, Physical Chemistry of Surfaces, John Wiley and Sons, 1982), and product technical data sheets and bulletins from commercial suppliers.
A wide range of anionic and non-ionic surfactants having utility for oil-in-water emulsions are suitable for forming component C) of the present composition.
However, preferred component C) are ethoxylated sorbitan esters or blends thereof.
In case of a blend, the amount of the ethoxylated sorbitan ester is at least 50% based on the blend.
Further, the blend preferably comprises a sorbitan ester, preferably in 5 to 30%, more preferred in 10 to 25% based on the blend.
Even more preferred, the blend also comprises an alkylaryl sulfonate, preferably isopropylammonium dodecylbenzenesulfonate, wherein the alkylaryl sulfonate is preferably present in 0.5 to 10%, more preferred in 1 to 5% based on the blend.

### More preferred, component C) is an ethoxylated sorbitan ester of general structure (II)

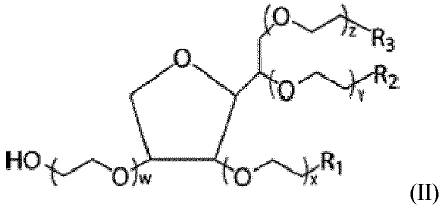

R₁, R₂ and R₃ are fatty acid groups or a free hydroxy group, where the fatty acid or the hydroxy group especially preferred a C10 to C20 fatty acid, even more preferred C12 to C18-fatty acids and highly preferred from the group of oleic, stearic, Lauric acid. The substituents R₁ to R₃ can be same or different.

Examples from this surfactant class are exemplified below, where Tween® 85 is preferred:
Tween® 85: R₁=R₂=R₃ = Oleic acid
Tween® 80: R₁=R₂= OH; R₃ = Oleic acid
Tween® 60: R₁=R₂= OH; R₃ = Stearic acid
Tween® 20: R₁=R₂= OH; R₃ = Lauric acid

As example the structure of Tween® 80: 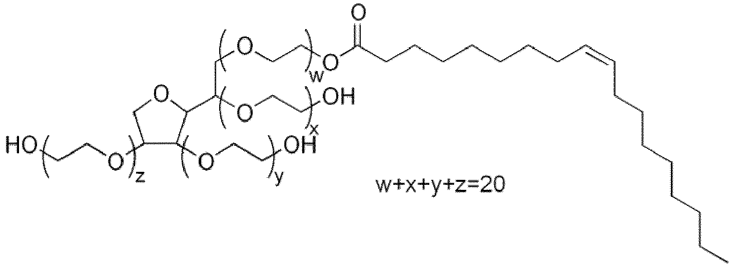 w, x, y and z are full numbers, from 0 to 20, especially preferred from 0 to 15 and most preferred from 0 to 10, where = means a hydroxy group.
In a different way one can substitute one or more EO units (ethylene oxide as shown in structure (II) with PO units (propylene oxide) eg for example in Tween® L-1505 (from CRODA) with 15 EO- and 5 PO-units.
Examples of surfactants of structure (II) are known to the expert, the commercially available brands are shown in following table:

| product | Mol EO | Mol PO | Log P |
|---|---|---|---|
| Tween® 21 | 4 | 0 | 2.71 |
| Tween® 22 | 8 | 0 | 1.90 |
| Tween® 23 | 12 | 0 | 1.08 |
| Tween® 24 | 16 | 0 | 0.26 |
| Tween® 20 | 20 | 0 | -0.55 |
| Tween® 80 | 20 | 0 | 1.99 |
| Tween® 60 | 20 | 0 | 2.48 |
| Tween® 40 | 20 | 0 | 1.47 |
| Tween® L-0515 | 5 | 15 | 7.44 |
| Tween® L-1010 | 10 | 10 | 4.68 |
| Tween® L-1505 | 15 | 5 | 1.92 |

Examples of additional surface-active substances C1) to C3) are listed hereinbelow, with EO representing ethylene oxide units, PO propylene oxide units and BO butylene oxide units:
C1) C₁₀-C₂₄-Alcohols, which can be alkoxylated, e.g., with 1-60 alkylene oxide units, preferably 1-60 EO and/or 1-30 PO and/or 1-15 BO, in any sequence. The terminal hydroxyl groups of these compounds may be end-capped by an alkyl, cycloalkyl or acyl radical with 1-24 carbon atoms. Examples of such compounds are: Genapol® C, L, O, T, UD, UDD, X products from Clariant, Plurafac® and Lutensol® A, AT, ON, TO products from BASF, Marlipal®24 and 013 products from Condea, Dehypon® products from Henkel, Ethylan® products from Akzo-Nobel such as Ethylan CD 120.
C2) Non-ionic surfactants of note as constituents of present component C2) are fatty acid and triglyceride alkoxylates, such as the Serdox®NOG products from Condea or alkoxylated vegetable oils, such as soybean oil, rapeseed oil, corn oil, sunflower oil, cottonseed oil, linseed oil, coconut oil, palm oil, safflower oil, walnut oil, peanut oil, olive oil or castor oil, in particular rapeseed oil, the term "vegetable oils" also being understood as meaning the transesterification products thereof, e.g. alkyl esters, such as rapeseed oil methyl ester or rapeseed oil ethyl ester, for example the Emulsogen® products from Clariant, as Emulsogen® EL 400, Emulsogen® EL 360, salts of aliphatic, cycloaliphatic and olefinic carboxylic acids and polycarboxylic acids, and α-sulfofatty acid esters, as available from Henkel.
C3) Anionic surfactants of note as constituents of present component C3) are benzenesulfonates, such as alkyl- or arylbenzenesulfonates, e.g. (poly)alkyl- and (poly)arylbenzenesulfonates which are acidic and neutralized with suitable bases, for example having 1 to 12 carbon atoms per alkyl radical or having up to 3 styrene units in the polyaryl radical, preferably (linear) dodecylbenzenesulfonic acid and the oil-soluble salts thereof, such as, for example, the calcium salt or the isopropylammonium salt of dodecylbenzenesulfonic acid. Examples of such compounds are: Emcol®P-1860 (Nouryon), Rhodacal® 60BE (Solvay), Ninate® 60E (Stepan)

Ethyleneoxy, propyleneoxy and butyleneoxy units, in particular ethyleneoxy units, are preferred for the alkyleneoxy units.

The composition of the present invention may typically contain component C) comprising an ethoxylated sorbitan ester or blends thereof, as well as C1), C2) and C3).
In a particularly preferred embodiment, the ethoxylated sorbitan ester or blends thereof C) is present in 13.5%, C1) in 1.5%, C2) in 3% and C3) in 3% and in another preferred embodiment the ethoxylated sorbitan ester or blends thereof C) is present in 9%, C1) in 1%, C2) in 3% and C3) in 3%.

Other suitable surface-active substances C) are, for example, surfactants based on non-aromatics, for example on the basis of heterocycles, olefins, aliphatics or cycloaliphatics, for example surface-active pyridine, pyrimidine, triazine, pyrrole, pyrrolidine, furan, thiophene, benzoxazole, benzthiazole and triazole compounds which are substituted by one or more alkyl groups and which have subsequently been derivatized, for example alkoxylated, sulfated, sulfonated or phosphated, and/or surfactants based on aromatics, for example benzenes or phenols which are substituted by one or more alkyl groups and which have subsequently been derivatized, for example alkoxylated, sulfated, sulfonated or phosphated. In general, the surface-active substances C) are soluble in the oil phase and suitable for emulsifying the latter together with the active substances dissolved therein upon dilution with water (to give the spray mixture). The dispersions according to the invention may comprise for example nonaromatic or aromatic surfactants or mixtures of nonaromatic and aromatic surfactants.

Preferred surface-active substances as component C) are e.g. ethoxylated sorbitan esters blends as Atplus® 309F LM from CRODA, and ethoxylated sorbitan esters as Tween® 24-LQ-(AP) from CRODA.

Further preferred surface-active susbtances C) are e.g. alkoxylated C10-C24-alcohols (C1) as Genapol® X060 from Clariant, fatty acids alkoxylates (C2) as Emulsogen® EL 400 from Clariant, calcium salts of dodecylbenzenesulfonic acid (C3) as Emcol®P-1860 from Nouryon or Rhodacal® 60BE from Solvay.

### Component D)

The organic poly acid as component D) is present in the composition preferably from 0.5 to 15%, more preferred from 0.5 to 12.5 %, and most preferred from 0.5 to 11%.

In a preferred embodiment, the organic poly acid D) is selected from the group of citric acid with crystal water (7 H₂O) and anhydrous citric acid. Preferably, D) is anhydrous citric acid.

In a preferred embodiment, the citric acid is used, to adjust the pH of the formulation between 1.8 and 3 (measured 10% of the concentrate in water), most preferred to 1.8 to 2.5.

In an alternative embodiment, the amount of anhydrous citric acid is between 5 and 7.5%.

### Component E)

The rheological modifier as component E) is present in the composition preferably from 0.1 to 7%, more preferred from 2 to 6%, and most preferred from 3 to 5%.

To control the sedimentation behavior of the dispersed components A), B) the dispersions comprise, as component E), rheological additives which are also known as thickeners. Those which are suitable in this context are synthetic or natural mineral products and/or in particular those organic rheological additives which are suitable for nonaqueous formulations.

Typically, one or more rheology modifiers (also known as thickeners, thickening agents or suspending agents) are included into the composition as part of component E) to prevent undesirable phase separation and/or sedimentation of solid particles (e.g., of components A) and B)) that can occur in unstructured suspension concentrates during storage. Thickening agents increase the viscosity of the continuous liquid medium in which solid particles (e.g., of components A) and B)) are suspended and thus reduce their propensity to settle and form a separated, compact sediment during storage. Also, a thickening agent may improve the efficiency of a wet milling process used to prepare the present composition.

Thickening agents are well known in the art of formulations. For the present composition having a liquid carrier comprising one or more fatty acid esters, thickening agents are generally selected from silicas and silicates, which may be naturally occurring, artificially produced, or organically modified.

Substances which are suitable from the class of the mineral rheological additives are pure silicas, for example of the Sipernat®, Wessalon® types or surface-treated silicates such as Aerosil® from Evonik. Silicas include synthetic precipitated or fumed silicas, which may be chemically (including organically) modified, for example with dimethyldichlorosilane, to increase hydrophobicity. Such silicas are commercially available under a variety of trade names (e.g., Sipernat® or Aerosil® (Evonik), CAB-O-SIL (Cabot)). An example of a hydrophobic fumed silica treated with dimethyldichlorosilane is Aerosil® R 974 (Evonik).

Silicates include phyllosilicate minerals having particles of less than 2µm size present in naturally occurring clays, such as kaolinite and smectites (e.g., smectite, hec-torite, attapulgite, montmorillonite), and their combinations such as bentonites. Clays comprising minerals of the smectite group generally can be organically chemically modified by cation exchange of metal ions with organic salts such as quaternary ammonium salts to increase hydrophobicity. Natural and modified clays are commercially available under a variety of trade names (e.g., Bentone (Elementis), Attagel (BASF)). Mixed oxides, are for example magnesium aluminum silicates such as attapulgite (®Attagel 40, Attagel 50 from BASF).

Organic chemical modification of clays through surface treatment with quaternary ammonium salts renders them more effective for rheology modification (particularly thickening under low-shear conditions) in non-aqueous systems, such as the liquid phase of the present composition formed from one or more fatty acid esters [i.e. component F)]. Examples of organically modified clays such as magnesium layered silicates are bentonites or hectorites including Bentone® 38, self-activating as Bentone® 1000, Bentone® SD2 and Bentone® SD3.

Pyrogenic silica from the Aerosil® range is a preferred rheological modifier. Examples of especially suitable fumed hydrophilic silica is Aerosil® 200, of hydrophobic silica Aerosil® R 202, Aerosil® R 972, Aerosil® R 974, Aerosil® R 816.

Fumed silicas (especially hydrophobic and hydrophilic together) work particularly well as thickening agents in the present composition.
Mostly preferred is the use of one or more synthetic amorphous silica-based rheological modifiers especially a mix of one hydrophilic and one hydrophobic component, specifically Aerosil® 200 and Aerosil® R 972. Most preferred is the use in a ratio hydrophilic to hydrophobic component of 1:1 to 1:3, most preferred 2% each or 1% hydrophilic and 3% hydrophobic component.

### Component F)

The one or more vegetable or mineral oils as component F) is present in the composition preferably from 30 to 80%, more preferred from 50 to 75%, and most preferred from 55 to 75%.

In a preferred embodiment, component F) is a mixture of a vegetable and mineral oil.
In a mostly preferred embodiment, component F) is a vegetable oil only, specifically rapeseed oil methyl ester.

Suitable oils of component F) are vegetable oils and mineral oils. The term vegetable oils means, for the purposes of the present invention, oils from oil-producing plant species such as soybean oil, rapeseed oil, corn oil, sunflower oil, cottonseed oil, linseed oil, coconut oil, palm oil, safflower oil or castor oil, in particular rapeseed oil, and their transesterification products, for example alkyl esters, such as rapeseed oil methyl esters.

The vegetable oils are preferably esters of C₁₀-C₂₂-, preferably C₁₂-C₂₀-fatty acids. The C₁₀-C₂₂-fatty acid esters are, for example, esters of unsaturated or saturated C₁₀-C₂₂-fatty acids, in particular those with an even number of carbon atoms, for example erucic acid, lauric acid, palmitic acid and in particular C₁₈-fatty acids such as stearic acid, oleic acid, linoleic acid or linolenic acid.

Examples of C₁₀-C₂₂-fatty acid esters are esters which are obtained by reacting glycerol or glycol with the C₁₀-C₂₂-fatty acids, as they are present for example in oils from oil-producing plant species, or C₁-C₂₀-alkyl-C₁₀-C₂₂-fatty acid esters as they can be obtained for example by transesterification of the abovementioned glycerol or glycol C₁₀-C₂₂-fatty acid esters with C₁-C₂₀-alcohols (for example methanol, ethanol, propanol or butanol). The transesterification can be carried out by known methods as they are described, for example, in the Römpp Chemie Lexikon, 9th edition, volume 2, page 1343, Thieme Verlag Stuttgart.

Preferred as C₁-C₂₀-alkyl-C₁₀-C₂₂-fatty acid esters are methyl esters, ethyl esters, propyl esters, butyl esters, 2-ethylhexyl esters and dodecyl esters. Preferred as glycol and glycerol C₁₀-C₂₂-fatty acid esters are the individual or mixed glycol esters and glycerol esters of C₁₀-C₂₂-fatty acids, in particular those fatty acids with an even number of carbon atoms, for example erucic acid, lauric acid, palmitic acid and in particular C₁₈-fatty acids such as stearic acid, oleic acid, linoleic acid or linolenic acid.

In the dispersions according to the invention, the vegetable oils can be present for example in the form of commercially available oil-containing formulation additives, in particular those based on rapeseed oil, such as Hasten® (Victorian Chemical Company, Australia, hereinbelow referred to as Hasten, main component: rapeseed oil ethyl ester), Actirob® B (Novance, France, hereinbelow referred to as Actirob B, main component: rapeseed oil methyl ester), Rako-Binol® (Bayer AG, Germany, hereinbelow referred to as Rako-Binol, main component: rapeseed oil), Renol® (Stefes, Germany, hereinbelow referred to as Renol, vegetable oil constituent: rapeseed oil methyl ester) or Stefes Mero® (Stefes, Germany, hereinbelow referred to as Mero®, main constituent: rapeseed oil methyl ester).

Particularly preferred is the use of a rapeseed oil methyl ester, C16-18 and C18-unsaturated from Syskem, Phytorob 926.65 from SOFIPROTEOL and Agnique ME 18 RD-F from BASF.

Suitable eg mineral oils are aliphatic or aromatic hydrocarbons such as toluene, xylenes and naphthalene derivatives, in particular 1-methylnaphthalene, 2-methylnaphthalene, C₆-C₁₆-aromatic mixtures such as, for example, the Solvesso® series (ESSO) with the types Solvesso® 100 (b.p. 162-177°C), Solvesso® 150 (b.p. 187-207°C) and Solvesso® 200 (b.p. 219-282°C) and their corresponding naphtalene depleted derivatives and mixtures of hydrocarbons comprising (C₆-C₂₀)-aliphatics which may be linear or cyclic, such as the products of the Shellsol® series, types T and K, or BP-n paraffins.
Particularly preferred is wherein the mineral oil is a mixture of aromatic hydrocarbons (C9-C11) naphtalene depleted such as Solvesso® 200 ND.

The composition of the present invention may typically contain no mineral oil or up to a maximum of 15%.

Most preferred component F) is rapeseed oil methyl ester.

### Component G)

In addition to the above components, other inert adjuvants and/or additive can also be incorporated into the compositions of this invention to provide a more satisfactory formulation. Such inert adjuvants include spreaders, foam suppressants, penetrants and correctives, crystallization inhibitors, dyes, anti-oxidants, foaming agents, light absorbers, mixing auxiliaries, complexing agents, neutralizing or pH-modifying substances and buffers, corrosion inhibitors, fragrances, wetting agents, take-up enhancers, micronutrients, plasticizers, glidants, lubricants, dispersants, microbicides, and liquid and solid fertilizers, wetters, antidrift agents, adhesives, , preservatives, antifreeze agents, colorants, perfumes, antifoams, evaporation inhibitors and agents which have a positive effect on stability, in particular the stability to hydrolysis. These are known in principle and are described, for example, in standard works: McCutcheon's "Detergents and Emulsifiers Annual", MC Publ. Corp., Ridgewood N.J.; Sisley and Wood, "Encyclopedia of Surface active Agents", Chem. Publ. Co. Inc., N.Y. 1964; Schönfeldt, "Grenzflächenaktive Athylenoxidaddukte" [Surface-active ethylene oxide adducts], Wiss. Verlagsgesellschaft, Stuttgart 1976; Winnacker-Küchler, "Chemische Technologie" [Chemical technology], volume 7, C. Hauser-Verlag, Munich, 4th edition 1986.

The further additives and/or adjuvants as per component G) are optionally present in the composition preferably from 0 to 5%, more preferred from 0.1 to 5 %.

The dispersions according to the invention can be prepared by customary processes which are already known, for example by mixing the various components with the aid of stirrers, shakers, mills or (static) mixers. Usually, the solid components are employed in finely-ground form.

The present composition can be easily prepared by combining the component ingredients and reducing the particle size of insoluble components [e.g., components A) and B)] in the liquid carrier formed by component F). As is well known in the art, particle size reduction of insoluble components in an oil dispersion can be beneficial for providing stable homogeneous suspensions, as well as maximizing bioefficacy of the composition. Generally, to produce stable suspensions, the size of particles in the suspension should be not greater than 50 µm, preferably not greater than 10 µm, and most preferably not greater than 5 µm.

A variety of methods for reducing particle size of insoluble components in oil dispersions are known in the art and suitable for preparing the present composition. These include ball-milling, bead-milling, sand-milling, colloid milling and air-milling combined with high-speed blending. Ball-, bead- and sand-mills are media mills that achieve size reduction of particles by vigorous agitation with grinding media (e.g., balls or beads made of glass or ceramic, or sand). In ball-mills, typically the container rotates, while in bead- or sand-mills, grinding is achieved by an impeller in the grinding media. In horizontal bead-mills, agitation is by the action of an internal agitator rapidly rotating along the axis of the milling chamber. Colloid mills achieve size reduction of particles by passing the material to be ground through a narrow gap of a rapidly rotating rotor-stator assembly. Ball-milling, bead-milling, sand-milling and colloid-milling generally involve wet-milling (i.e. the liquid carrier is present). Air-milling is suitable for dry powders (e.g., present components A) and B)), which would then be combined with liquid components (e.g., present component F)) and high-speed blended using high-speed impellers or dispergators (i.e. rotor-stator). For sake of convenience, the present components can be combined before milling.
Thus, in this process for preparing the composition of the invention, components A) and B) are milled together in a liquid carrier comprising components F) and C), and any other components (e.g., component D) and E)) are present either dissolved or as solid particulates in the milling mixture. Bead-milling has been found to work very well for preparing the present composition. The Examples of the present disclosure use a Dyno-mill horizontal bead mills (Willy A Bachofen AG) and related types of low energy mills.

The present invention still further provides a method of controlling undesirable vegetation at a locus which comprises diluting a herbicidal composition according to the present invention with water and applying a weed controlling amount of the diluted composition to the locus. The application of the composition may vary within wide limits and depends on the nature of the soil, the method of application (pre- or post-emergence; seed dressing; application to the seed furrow etc), the crop plant, the undesirable vegetation to be controlled, the prevailing climatic conditions and other factors.

The herbicide composition of the present invention can also be used as a mixture together with or in combination with other agricultural chemicals, adjuvants, crop oil concentrates, fertilizers.

The term tank-mix adjuvant includes surfactants, such as wetting agents, emulsifiers, dispersing agents and/or organic solvents, mineral and vegetable oils and combinations thereof. Adjuvants, especially those which are suitable for agrochemical use, are for example known from Foy, C. L., Adjuvants for agrichemicals, CRC Press Inc., Boca Raton, Florida, USA.

The herbicidal composition of the present invention is preferably a liquid
"ready-mix" formulation - that will be diluted prior to use. Dilution of the herbicidal composition of the present invention will typically result in a suspo-emulsion.
The present invention further provides a method for the preparation of an herbicidal composition of the present invention comprising mixing together, simultaneously or sequentially in any order the components A) to G).

The dispersions according to the invention show significantly improved application behavior and manifests itself in markedly reduced sieve residues or clogging of sieves or nozzles. The application rate of the dispersions according to the invention per hectare generally varies between 0.5 and 5 liters, preferably between 1.0 and 4.0 liters.

For use, the dispersions according to the invention may be diluted in a customary manner, for example to give suspensions, emulsions or suspo-emulsions, for example by means of water. It may be advantageous to add, to the spray mixtures obtained, further agrochemical active substances (for example partners for tank mixers in the form of suitable formulations, in particular preferred is a tank mix of the instant composition with a formulation comprising Flufenacet and Terbuthylazine (e.g. Aspect®) and/or adjuvants and additives conventionally used for application, for example auto-emulsifying oils such as vegetable oils or liquid paraffin and/or further fertilizers. The present invention therefore also relates to the herbicidal compositions prepared in this manner.

Usually, the ratio of dispersion according to the invention to water amounts to from 1:500 to 1:50. The spray mixture per ha is usually 50 to 500 liters, preferably 75 to 350 liters of water. In some cases, the concentrations may also fall short of, or exceed, the limits detailed herein. The dispersions are also suitable for aerial application. To this end, dispersions according to the invention are applied either in undiluted form or diluted with water or with organic solvents. In this context, the volume of additional carrier liquid will, as a rule, vary from 0.5 to 50 liters per hectare. The present invention therefore also relates to such herbicidal compositions based on the dispersions according to the invention.

Dilution of the present composition with water using agitation provides a spray mixture comprising an aqueous dispersion of particles of components A) and B), and an emulsion of component F) in the water.

The term herbicide is used herein to denote a compound which controls or modifies the growth of plants. The term plants is used to include all post-emergent vegetation, ranging from seedlings to established vegetation.

The herbicidal composition of the present invention is preferably a liquid
"ready-mix" formulation - that will be diluted prior to use. Dilution of the herbicidal composition of the present invention will typically result in a suspo-emulsion.

The locus may include both "desirable" and "undesirable" vegetation. Desirable vegetation is for example a crop which is substantially unaffected by the herbicide application. Examples of crops include for example perennial crops such as citrus fruit, grapevines, nuts, oil palm, olives, pome fruit, stone fruit and rubber, and annual arable crops, such as cereals, for example barley and wheat, cotton, oilseed rape, maize, rice, soy beans, sugar beet, sugar cane, sunflowers, ornamentals and vegetables. The compositions of the present invention are particularly suited for controlling undesirable vegetation in maize.

The term "crop" is to be understood as also including a crop which has been genetically modified and in particular one which has been rendered tolerant to herbicides or classes of herbicides (e.g. ALS-, GS-, EPSPS-, PPO- and HPPD-inhibitors).

The mixtures according to the invention have an excellent herbicidal activity against a broad spectrum of economically important mono- and dicotyledonous harmful plants. The active substances also act efficiently on perennial weeds which produce shoots from rhizomes, root stocks or other perennial organs and are difficult to control.

In this context, the compositions may be applied for example before sowing, pre-emergence or post-emergence. Specifically, some representatives of the monocotyledonous and dicotyledonous weed flora which can be controlled by the herbicidal compositions according to the invention may be mentioned by way of example, without the mention being intended as a restriction to certain species: among the monocotyledonous weed species, good activity is effected on, for example, Apera spica venti, Avena spp., Alopecurus spp., Brachiaria spp., Digitaria spp., Lolium spp., Echinochloa spp., Panicum spp., Phalaris spp., Poa spp., Setaria spp. and Bromus spp. such as Bromus catharticus, Bromus secalinus, Bromus erectus, Bromus tectorum and Bromus japonicus and Cyperus species from among the annuals, and, among the perennial species, Agropyron, Cynodon, Imperata and Sorghum and also perennial Cyperus species. Among the dicotyledonous weed species, the spectrum of action extends to species such as, for example, Abutilon spp., Amaranthus spp., Chenopodium spp., Chrysanthemum spp., Galium spp. such as Galium aparine, Ipomoea spp., Kochia spp., Lamium spp., Matricaria spp., Pharbitis spp., Polygonum spp., Sida spp., Sinapis spp., Solanum spp., Stellaria spp., Veronica spp. and Viola spp., Xanthium spp. among the annuals and Convolvulus, Cirsium, Rumex and Artemisia among the perennial weeds.

When the herbicidal compositions according to the invention are applied post-emergence to the green parts of the plant, their growth also stops drastically very soon after the treatment, and the weed plants remain at the growth stage present at the time of application or die fully after a certain time has elapsed, so that, in this manner, competition by weeds, which is harmful to the crop plants, is eliminated at a very early point in time and in a sustained manner.

The herbicidal compositions according to the invention are distinguished by an herbicidal activity with a rapid onset and long persistence. The rainfastness of the active substances in the combinations according to the invention is, as a rule, advantageous. A particular advantage is that the dosage rates of herbicidal compounds which are effective, and which are used in the herbicidal compositions can be adjusted to such a low level that their soil action is as low as possible. This not only makes possible their use in sensitive crops for the first time, but also contaminations of the ground water are virtually avoided. The combination according to the invention of active substances makes possible a considerable reduction of the required application rate of the active substances.

The abovementioned properties and advantages are useful in practical weed control in order to keep agricultural crops free from undesired competing plants, thereby safeguarding and/or increasing the yields in terms of quality and quantity. These novel compositions markedly outperform the technical standard regarding the above-described properties.

Although the herbicidal compositions have an outstanding herbicidal activity against monocotyledonous and dicotyledonous weeds, crop plants of economically important crops, for example maize (corn) are only damaged to a negligible extent, or not at all. This is why the herbicidal compositions according to the invention are highly suitable for the selective control of undesired vegetation in stands of agriculturally useful plants.

Moreover, the herbicidal compositions according to the invention have outstanding growth-regulatory properties in crop plants. They engage in the plants' metabolism in a regulatory fashion and can therefore be employed for the targeted control of plant constituents and for facilitating harvesting such as, for example, by triggering desiccation and stunted growth. Moreover, they are also suitable for generally controlling and inhibiting undesired vegetative growth without killing the plants in the process. Inhibiting the vegetative growth plays an important role in many monocotyledonous and dicotyledonous crops since lodging can thereby be reduced or prevented completely.

Owing to their herbicidal and plant-growth-regulatory properties, the herbicidal compositions according to the invention can also be used for controlling harmful plants in crops of genetically modified plants which are known or yet to be developed. As a rule, the transgenic plants are distinguished by special advantageous properties, for example by resistances to certain pesticides, mainly certain herbicides, resistances to plant diseases or pathogens of plant diseases, such as certain insects or microorganisms such as fungi, bacteria or viruses. Other special properties relate for example to the harvested material regarding quantity, quality, storability, composition and specific constituents. Thus, transgenic plants are known which have an increased starch content or a modified starch quality, or those which have different fatty acid composition of the harvested material.

Preferred is the use of the herbicidal compositions according to the invention in economically important transgenic crops of useful plants and ornamentals, for example Gramineae crops such as wheat, barley, rye, oats, sorghum/millet, rice and maize, or else crops of sugar beet, cotton, soybean, oilseed rape, potato, tomato, pea and other vegetables. Preferably, the compositions according to the invention can be employed as herbicides in crops of useful plants which are resistant or have been made resistant by means of genetic engineering, to the phytotoxic effects of the herbicides.

When using the herbicidal compositions according to the invention in transgenic crops, activities which are specific to the application in the respective transgenic crop can frequently be observed, in addition to the activities which can be observed in other crops, for example a modified or specifically extended weed spectrum which can be controlled, modified application rates which may be employed for application, preferably good combining ability with the herbicides to which the transgenic crop is resistant, and an influence on the growth and yield of the transgenic crop plants.

The mixtures of the invention can preferably be employed as herbicides in useful plant crops which are resistant or have been made genetically resistant to the phytotoxic effects of the herbicides.
The invention therefore also relates to the use of the above mixtures according to the invention as herbicides for controlling harmful plants in transgenic crop plants.

For use, the formulations of the present invention are diluted, if appropriate, in a customary manner, e.g. by means of water.

The application rate of the compounds of the formula (I) necessary varies with the external conditions such as, inter alia, temperature, humidity and the type of herbicide used. It can vary within wide limits, e.g. between 0.001 and 10.0 kg/ha or more of active substance but is preferably between 0.005 and 5 kg/ha, and more preferably between 0.08 and 0,15 kg/ha.

### Use examples

The terms used in the examples hereinbelow denote:

| | |
|---|---|
| Tembotrione | CAS-No.: 335104-84-2, IUPAC name: 2-{2-chloro-4-mesyl-3-[(2,2,2-trifluoroethoxy) methyl] benzoyl} cyclohexane-1,3-dione (Bayer AG) |
| Isoxadifen-ethyl | CAS-No.: 163520-33-0, IUPAC name: ethyl 4,5-dihydro-5,5-diphenyl-1,2-oxazole-3-carboxylate (Bayer AG) |
| Atplus® 309F LM | Ethoxylated Sorbitan Ester Blend (CRODA) |
| Bentone® 38 | Montmorillonit, Phyllosilicates of an organically modified hectorite (Elementis) |
| Anhydrous Citric acid | Organic poly acid, CAS number 5949-29-1 |
| Emcol® P-1860 | Branched dodecylbenzenesulfonate, calcium salt in n-octanol (Akzo Nobel) |
| Rhodacal® 60BE | Calcium-dodecylbenzenesulphonate in 2-Ethylhexanol (ca.40%) (Solvay) |
| Emulsogen® EL 400 | Ethoxylated Castor Oil, ethoxylated Castor Oil with 40 EO (Clariant) |
| Genapol® X-060 | nonionic surfactant based on Iso-tridecyl alcohol polyglycol ether with 6 EO (Clariant) |
| Rapeseed oil methyl ester Solvesso® 200 ND | CAS Number 73891-99-3, methyl ester of rapeseed oil aromatic hydrocarbon solvent ND (b.p. 219-282°C.) (ExxonMobil) |
| Aerosil® R 202 | Silicones and siloxanes, dimethyl-, reaction products with silica, synthetic amorphous silica, hydrophobic silica (Evonik) |
| Aerosil® R 972 | Silicones and siloxanes, dimethyl-, reaction products with silica, synthetic amorphous silica, hydrophobic silica (Evonik) |
| Aerosil® 200 | Silicones and siloxanes, dimethyl-, reaction products with silica, synthetic amorphous silica, hydrophilic silica (Evonik) |
| Tween® 24-LQ-(AP) | Polyoxyethylene (16) sorbitan monolaurate (CRODA) |

### Use examples - preparation of a dispersion according to the invention

**Table 1, Ex.1**

| Component | | Amount in % |
|---|---|---|
| A) | Tembotrione | 4,90 |
| B) | Isoxadifen -ethyl | 2,24 |
| C) | Atplus® 309F LM | 9 |
| E) | Aerosil® R 972 | 2 |
| E) | Aerosil® 200 | 2 |
| D) | Anhydrous citric acid | 5 |
| C) | Rhodacal® 60BE | 3 |
| C) | Emulsogen® EL 400 | 3 |
| C) | Genapol® X-060 | 1 |
| F) | Rapeseed oil methyl ester | 67,86 |

Components C) are initially introduced in dissolved form into component F) and the solution is stirred until homogeneous. Then, the finely-ground components D) and E) are added little by little with stirring, and last finely grounded component A) and B) are dispersed into the mixture with stirring. The dispersion is then ground together in a bead mill WAB Research (Dyno-mill horizontal bead mills (Willy A Bachofen AG)) until a homogeneous fine dispersion has formed with a particle size d90 between 6-12 □m. A fine dispersion of tembotrione and isoxadifen-ethyl into the oil thus is obtained.

The above formulations may also be provided using a so-called one-pot process whereby all of the ingredients are mixed together and the resulting mixture ground in a bead mill.

All the samples were put into storage at an elevated temperature (2 weeks at 54°C, 8 weeks at 40°C) and 12 weeks at Room Temperature, wherein Room Temperature, if not otherwise defined in this application is 21°C, in order to simulate long-term stability.

The resulting suspension according to the invention is storage-stable over a prolonged period. Even upon prolonged storage, the solid constituents show only a very low tendency to form a hard sediment and clumping and the active substance A) and B) show only a very low degree of decomposition. The suspension according to the invention can be diluted with water to give a homogeneous suspo-emulsion. It has outstanding activity against harmful plants while simultaneously being very well tolerated in crops of useful plants.

The storage stability of the formulation according to the invention, which is increased in comparison to a prior-art formulation comprising ammonium salts, manifests itself for example in the form of a lesser degree of decomposition of the active substance as component A) upon storage at different temperatures.

To this end, a first experiment involved preparing the abovementioned formulation according to the invention and, for comparison purposes, a similar formulation comprising citric acid instead of ammonium salts in accordance with the above-described method and storing the products for 8 weeks at 40° C and 2 weeks at 54°C. In a second experiment, the degree of decomposition of the active substance of component A) was determined after storage for 8 weeks at a temperature of 40° C and 2 weeks at 54°C. The results in tables 3 and 7 show that the formulation according to the invention shows a lower decomposition of the active substance as of component A) than the formulation comprising ammonium salts with the same ingredients (Comparative Formulation I). As is shown in table 5, use of Bentone® 38 as a rheology modifier does not deliver sufficient chemical stability of the active substance as of component A).

**Table 2**

| Examples 1 to 4 are according to the Invention, Comp. Ex.5, Ex.6 and Comparative Formulation I are for comparison. Comparative Formulation I is a non-aqueous suspension concentrate containing 44 g/L Tembotrione, 22 g/L Isoxadifen-ethyl, 474,5 g/L rapeseed oil methyl ester carrier, 92 g/L Atplus® 309F LM and 150 g/L of ammonium sulfate. | | | | | | | |
|---|---|---|---|---|---|---|---|
| Component | | Amount in % | | | | | |
| | | Ex.1 | Ex.2 | Ex.3 | Ex.4 | Comp. Ex.5 | Comp. Ex.6 |
| A) | Tembotrione | 4,90 | 4,58 | 4,58 | 4,58 | 5,05 | 4,71 |
| B) | Isoxadifen -ethyl | 2,24 | 2,29 | 2,29 | 2,29 | 2,53 | 2,16 |
| C) | Atplus® 309F LM | 9 | 9 | 9 | 9 | | 9 |
| | Bentone® 38 | | | | | | 0,9 |
| D) | Anhydrous citric acid | 5 | 0,5 | 1 | 2 | 5 | 10 |
| C) | Emcol® P-1860 | | | | | | 3 |
| C) | Rhodacal ® 60BE | 3 | 3 | 3 | 3 | 5 | |
| C) | Emulsogen® EL 400 | 3 | 3 | 3 | 3 | 3 | 3 |
| C) | Genapol® X-060 | 1 | 1 | 1 | 1 | | 1 |
| E) | Aerosil® 200 | 2 | 2 | 2 | 2 | 2 | |
| C) | Tween® 24-LQ-(AP) | | | | | 20 | |
| E) | Aerosil® R 972 | 2 | 2 | 2 | 2 | 2 | |
| F) | Solvesso® 200 ND | | | | | | 15 |
| F) | Rapeseed oil methyl ester | 67,86 | 72,63 | 72,13 | 71,13 | 55,42 | 51,23 |

**Table 3**

| The stability data provided below show the amount of decomposition of tembotrione in the various oil dispersions after storage (2W54). The decomposition was assessed using High Performance Liquid Chromatography. | | | | | | | |
|---|---|---|---|---|---|---|---|
| Physical Chemical Parameter | Ex.1 | Ex.2 | Ex.3 | Ex.4 | Comp. Ex.5 | Comp. Ex.6 | Comp. Formulation I |
| Visual aspect 2W54 | 75% settling | No settling | No settling | No settling | No settling | No settling | 20% settling + **hard sediment** |
| Visual aspect 8W40 | 70% settling | 20% settling | 30% settling | 20% settling | No settling | 5% settling | 30% settling + **hard sediment** |
| Visual aspect 12WRT | 60% settling | 20% settling | 25% settling | 20% settling | No settling | 15% settling | 32% settling + **hard sediment** |
| Decomposition of tembotrione 2W54 | 2,69 | 3,75 | 3,77 | 3,35 | 5,57 | 5,29 | 6,58 |
| Dyn.Visc. 20 1/s 2W54 | 71 | | | | | 714 | 595 |
| Dyn.Visc. 20 1/s 8W40 | 79 | | | | | 462 | 838 |
| Dyn.Visc. 20 1/s 12WRT | 77 | | | | | 192 | 829 |

Upon storage at different temperatures and time intervals, no hard sediment is seen when a hydrophilic and hydrophobic Aerosil® type thickener is used, compared to the Comparative Formulation I. This is a clear advantage for industrialization and sale of a product which is physically more stable.
With citric acid, tembotrione shows a higher chemical stability vs Comparative Formulation I. Only in the case where Tween® 24-LQ-(AP) is used at high loading (ca. double vs Atplus® 309F LM, Comp. Ex.5), or Bentone® 38 as thickener is used (Comp. Ex.6), the active is marginally less stable. Changing thickener system reveals a formulation which is easily flowable, with a very low viscosity (compare Ex.1 with Comp. Ex.6) and can is emptied with higher easiness, with a higher flowability especially also seen at higher temperatures. The formulations according to the invention display a much better bulk physical stability compared to Comparative Formulation I, without hard sediment formation upon storage.
Comparative (Comp.) Ex.6 with Bentone® 38 as thickener does not show good physical stability despite no hard sediment was detected withtoo high viscosity but allows for acceptable good chemical stability. An acceptable dynamic viscosity range for good pourability and upscaling is in the range 70 - 450 20 1/s at 2W54.

These results show the improved stability of tembotrione in herbicidal compositions comprising anhydrous citric acid compared with compositions such as Comparative Formulation I comprising ammonium sulfate. It can be seen that the stability of tembotrione is markedly improved in compositions comprising anhydrous citric acid.

**Table 4:**

| Comparative Examples (Comp. Ex.) where Bentone® 38 is used, together with citric acid, and the loading of the actives is raised, where no hard sediment is seen upon storage at different temperatures and storage times. | | | | | |
|---|---|---|---|---|---|
| Component | | Amount in % | | | |
| | | Comp. Ex.7 | Comp.E x.8 | Comp. Ex.9 | Comp.E x.10 |
| A) | Tembotrione | 9,80 | 6,47 | 4,90 | 4,31 |
| B) | Isoxadifen -ethyl | 4,90 | 3,24 | 2,45 | 2,16 |
| C) | Atplus® 309F LM | 9 | 9 | 9 | 9 |
| | Bentone® 38 | 0,9 | 0,9 | 0,9 | 0,9 |
| D) | Anhydrous citric acid | 10 | 10 | 10 | 10 |
| C) | Emcol® P-1860 | 3 | 3 | 3 | 3 |
| C) | Emulsogen® EL 400 | 3 | 3 | 3 | 3 |
| C) | Genapol® X-060 | 1 | 1 | 1 | 1 |
| F) | Solvesso® 200 ND | 15 | 15 | 15 | |
| F) | Rapeseed oil methyl ester | 43,39 | 48,39 | 50,75 | 66,33 |

**Table 5:**

| The stability data provided below show the amount of decomposition of tembotrione in the various oil dispersions after storage (2W54 and 8W40). The decomposition was assessed using High Performance Liquid Chromatography. | | | | |
|---|---|---|---|---|
| Physical Chemical Parameter | Comp. Ex.7 | Comp. Ex.8 | Comp. Ex.9 | Comp. Ex.10 |
| Visual aspect 2W54 | 10% settling, no hard sediment, homogeneous | 15% settling, no hard sediment, homogeneous | 15% settling, no hard sediment, homogeneous | 10% settling, no hard sediment, homogeneous |
| Visual aspect 8W40 | 15% settling, no hard sediment, homogeneous, marbeled | 30% settling, no hard sediment, homogeneous | 30% settling, no hard sediment, homogeneous | 25% settling, no hard sediment, homogeneous |
| Decomposition of tembotrione 2W54 | 6,8 | 7,16 | 8,24 | 6,62 |
| Decomposition of tembotrione 8W40 | 7,8 | 2,89 | 2,61 | 2,28 |
| Dyn.Visc. 20 1/s 2W54 | 771 | 417 | 370 | 440 |
| Dyn.Visc. 20 1/s 8W40 | 728 | 343 | 321 | 339 |

Higher loading of actives does destabilize the formulation giving a much higher viscosity and jeopardizing flowability and bulk properties. Solvesso® 200 ND presence or absence does not influence with evidence the physical stability of the formulation, however reduces the instability of tembotrione at 2W54. None of the formulations show hard sediment formation, thus emptying of cans is easy at customer level. Anhydrous citric acid not being highly hygroscopic does not induce extra swelling of Bentone® 38. Nevertheless, the use of Bentone® 38 does not provide the improved chemical stability of tembotrione needed for registration and commercialization purposes, thus it is not a solution for industrialization and sales.

**Table 6:**

| Examples where Aerosil® R 202 alone is used (hydrophobic type), together with citric acid variation, holding the loading constant, where no hard sediment is seen upon storage at different temperatures and storage times. | | | | | |
|---|---|---|---|---|---|
| Component | | Amount in % | | | |
| | | Ex.11 | Ex.12 | Ex.13 | Ex.14 |
| A) | Tembotrione | 4,31 | 4,31 | 4,31 | 4,31 |
| B) | Isoxadifen -ethyl | 2,16 | 2,16 | 2,16 | 2,16 |
| C) | Atplus® 309F LM | 9 | 9 | 9 | 9 |
| E) | Aerosil® R 202 | 4 | 4 | 4 | 4 |
| D) | Anhydrous citric acid | 3 | 5 | 7 | 10 |
| C) | Emcol® P-1860 | 3 | 3 | 3 | 3 |
| C) | Emulsogen® EL 400 | 3 | 3 | 3 | 3 |
| C) | Genapol® X-060 | 1 | 1 | 1 | 1 |
| F) | Rapeseed oil methyl ester | 70,53 | 68,53 | 66,53 | 63,53 |

**Table 7:**

| The stability data provided below show the amount of decomposition of tembotrione in the various oil dispersions after storage (2W54 and 8W40). The decomposition was assessed using High Performance Liquid Chromatography. | | | | |
|---|---|---|---|---|
| Physical Chemical Parameter | Ex.11 | Ex.12 | Ex.13 | Ex.14 |
| Visual aspect 2W54 | 10% settling, no hard sediment, homogeneou s | 10% settling, no hard sediment, homogeneous | 10% settling, no hard sediment, homogeneous | 10% settling, no hard sediment, homogeneous |
| Visual aspect 8W40 | 15% settling, no hard sediment, homogeneou s | 15% settling, no hard sediment, homogeneous | 15% settling, no hard sediment, homogeneous | 15% settling, no hard sediment, homogeneous |
| Visual aspect 12WRT | 20% settling, no hard sediment, homogeneou s | 25% settling, no hard sediment, homogeneous | 25% settling, no hard sediment, homogeneous | 20% settling, no hard sediment, homogeneous |
| Decomposition of tembotrione 2W54 | 6,54 | 5,21 | 3,88 | 4,1 |
| Decomposition of tembotrione 8W40 | 2,7 | 1,58 | 1,36 | 2,73 |

While not every formulation shows the same excellent tembotrione degradation levels at 2W54 storage point compared to the Aerosil®-mix of Examples 1-4, with the use of between 5% and 10% of citric acid, the chemical stability is still improved over the comparative Examples. By using Aerosil® R 202 as the only thickener no hard sediment is seen at higher temperatures upon storage and settling does not reach a critical level compared to Comparative Formulation I. No hard sediment formation is an advantage for industrialization and customer use.
As pointed out, compared to the use of a hydrophobic / hydrophilic Aerosil® pair (Ex. 1 to Ex.4), with the use of only a hydrophobic type Aerosil® thickener the increase of the chemical stability of tembotrione is not within registration threshold of 5%, but still good.

The use of citric acid as stated in the available prior art is not only as water conditioning agent e.g. chelator to reduce the negative impact of hard water on the herbicidal activity of HPPD herbicides, but much more citric acid was found according to the present invention, as much as ammonium sulfate, to be an enhancer of tembotrione while boosting its efficacy in controlling weeds. However, citric acid combined with an appropriate hydrophilic and hydrophobic pair of Aerosil® rheology modifiers, does not reveal the negative effect on physical stability and bulk storage stability that is encountered while using a hygroscopic salt as ammonium sulfate. The advantage of using citric acid with appropriately chosen Aerosil® type rheology modifiers is to be able to produce a chemically and especially a physically stable, hard sediment free non-aqueous formulation which can be easily upscaled.

### Methods:

All test were performed with CIPAC Methods (CIPAC = Collaborative International Pesticides Analytical Council; www.cipac.org).

### %:

The amounts of the components present in the samples as given in the tables are expressed in values are referred in the values are referred in % by
weight.

### Visual aspect definitions

Settling = % of supernatant (syneresis) eg liquid phase on top not containing suspended particles; the amount of phase separation also named syneresis (Syn) is given in % (5% means 5% clear phase and 95% suspension)
Hard sediment = sediment of settled particles does not allow re-homogenization, this does not allow to prepare a suitable spray solution in water
3 Phases = formulation shows 3 distinct phases and cannot be re-homogenized
Homogeneous = no special phase disruption seen-no phase separation or hard sediment formation

### Method for testing the storage stability

Active ingredient decomposition after 2W54 storage: The storage was done after CIPAC MT 46.3 at 2 weeks 54°C. 2W54 = Result of the fast storage (2 weeks 54°C) to check the long time storage stability of a formulation. The test for determining the storage stability is carried out by storing 5-5000 g samples of the formulations according to the invention at the temperatures and storage times of 2W54°C. After this storage, the active compound analysis is carried out by HPLC methods known to the person skilled in the art.

Storage conditions given mean:

| | |
|---|---|
| 2W54 | Two weeks at 54°C |
| 8W40 | Eight weeks at 40°C |
| 12WRT | Twelve weeks at room temperature |

### Dyn.Visc. 20 1/s = Dynamic viscosity at 20s-1

Determination of the Viscosity According to CIPAC MT 192: The determination of the viscosities was done according to CIPAC method MT 192 and determinations were made with a normal commercial rotation viscosimeter RheoStress RS 150 from Haake. For the characterization of the flow properties, the dynamic viscosities were measured at one rate: at 20s-1.

### Biological examples

### Greenhouse Results of herbicidal activity of different formulations of the present invention compared to Comparative Formulation I.

Process: standard spring field application of 300L/ha spray solutions. Actives were sprayed at a concentration of 25 gai /ha for tembotrione and 12,5 gai /L of isoxadifen-ethyl. The inventive formulations following this application were applied in form of ODs (oil dispersions).

For this mid post-emergent trial seeds of the below mentioned species were sown in 7 cm jiffy pots containing standard soil (14,7% sand, 19,9% clay, 65,4% silt and 1,8% organic matter) covered with 0,5cm depth of sandy soil and lightly irrigated from above. The pots were placed in a glasshouse with climatic conditions: 16 hour day; 8 hour night, 26°C day 13°C night and 60% relative humidity to germinate and grow. The plants were grown on until they had reached BBCH 12-14 (1 leaf stadium) and then the formulations applied in a spay volume of 3001 water/ha using a flat fan nozzle XR8001 at a pressure of 1.8 bar. Following the application, the pots were placed back into a glasshouse and the plants grown on. During the trial phase the pots were irrigated via flood irrigation as required for good plant growth.

Results are given for herbicidal efficacy on Large crab grass (*Digitaria sanguinalis,* DIGSA), common barnyard grass (*Echinochloa crus-galli,* ECHCG), *Velvetleaf* (*Abutilon theophrasti,* ABUTH), Pigweed, (*Amaranthus retroflexus,* AMARE), Lamb's-quarters (*Chenopodium album,* CHEAL), Cleavers (*Galium aparine*, GALAP), Cocklebur (*Xanthium strumarium*, XANST).
Final efficacy was rated 20 days after application (DAT), visual evaluation is made on the activity of the formulations, on a scale of 0-100 by optical comparison to untreated control. A rating of 0 is defined as no crop injury / weed control and 100 as complete crop kill / weed control compared to an untreated control. Visual percent crop injury was assessed in a comparative manner at 20 DAT.
Selectivity was tested on corn (*Zea mays,* ZEAMA).
Results are given for herbicidal efficacy on following weeds, while selectivity was tested on corn (*Zea mays*, ZEAMA). Comparative Formulation I: composition as described above.

The following abbreviations were used:
BBCH = The extended BBCH-scale is a system for a uniform coding of phenologically similar growth stages of all mono- and dicotyledonous plant species. The decimal code, which is divided into principal and secondary growth stages, is based on the well-known cereal code developed by ZADOKS et al. (1974) in order to avoid major changes from this widely used phenological key. The abbreviation BBCH derives from Biologische Bundesanstalt, Bundessortenamt and CHemical industry.

The region BBCH 00-10 means Germination / sprouting / bud development, the region BBCH 10-25 means Leaf development (main shoot) up to Formation of side shoots / tillering.

**Table 8:**

| Herbicidal activity of formulations applied as an OD (oil dispersion). | | | | | | | | | |
|---|---|---|---|---|---|---|---|---|---|
| % Citric acid | Ex. | Herbicidal activity in % against | | | | | | | |
| | | ZEAMA | DIGSA | ECHCG | ABUTH | AMARE | CHEAL | GALAP | XANST |
| 0 | Comparative Formulation I | 4 | 65 | 94 | 65 | 75 | 75 | 50 | 93 |
| 5 | 1 | 0 | 60 | 94 | 68 | 80 | 78 | 45 | 88 |
| 0,5 | 2 | 0 | 75 | 94 | 65 | 78 | 80 | 45 | 92 |
| 1 | 3 | 0 | 75 | 95 | 75 | 65 | 90 | 60 | 95 |
| 2 | 4 | 0 | 70 | 94 | 68 | 78 | 80 | 55 | 94 |
| 5 | 5 | 0 | 78 | 93 | 60 | 93 | 90 | 50 | 93 |

The results show that efficacy of the inventive formulations from the present invention is comparable if not even superior compared to the Comparative Formulation I, while selectivity is fully retained.

**Table 9:**

| Herbicidal activity of formulations applied as an OD (oil dispersions). Results are given for herbicidal efficacy on following weeds, while selectivity was tested on corn (Zea mays, ZEAMA). | | |
|---|---|---|
| **Target** | **Bayer code** | **Species/Variety** |
| **Corn** | ZEAMA | *Zea mays ssp. amylacea* |
| **Alexandergrass** | BRAPL | *Brachiaria plantaginea* |
| **Crabgrass, large** | DIGSA | *Digitaria sanguinalis* |
| **Barnyardgrass, common** | ECHCG | *Echinochloa crus-galli* |
| **Velvetleaf** | ABUTH | *Abutilon theophrasti* |
| **Amaranth, Palmer** | AMAPA | *Amaranthus palmer* |
| **Fat-hen** | CHEAL | *Chenopodium album* |
| **Bindweed, black** | POLCO | *Polygonum convolvulus* |

| % Citric acid | Ex. | Herbicidal activity in % against | | | | | | | |
|---|---|---|---|---|---|---|---|---|---|
| | | ZEAM A | BRAP L | DIGS A | ECHC G | ABUT H | AMAP A | CHEA L | POLC O |
| 0 | Comparativ e Formulatio n I | 28 | 58 | 95 | 100 | 100 | 95 | 100 | 50 |
| 3 | 11 | 25 | 75 | 98 | 100 | 100 | 95 | 100 | 50 |
| 5 | 12 | 20 | 70 | 95 | 95 | 98 | 90 | 90 | 60 |
| 7 | 13 | 20 | 70 | 98 | 100 | 100 | 90 | 100 | 55 |

The results show that efficacy is comparable if not in some cases higher compared to Comparative Formulation I, while selectivity is fully retained.
The inventive formulations show a very high herbicidal activity close - or sometimes superior-to the Comparative Formulation I. The use of 0,5% to 7% (not limited to) Citric acid instead of 15% of an ammonium salt is a way to replace a salt that would induce physical stability problems upon prolonged storage. This replacement does not affect the biological activity. Replacing the ammonium sulfate in the Comparative Formulation I with citric acid (which is a cheap commodity) is an option from the biological stand point and could resolve the unwanted effects of sedimentation and clumping in the formulation during storage. Citric acid being a cheap product could lead to cost savings in the final formulation steps of production which would be favorable for the profitability of this product.

An industrial advantage of using citric acid instead of an ammonium sulfate / phosphate activator are the strongly reduced cost of goods resulting at the end for the whole formulation.

## Claims

1. A single liquid-phase non-aqueous herbicide dispersion comprising:
A) at least one HPPD inhibitor selected from the class of the triketone HPPDs,
B) at least one safener,
C) at least one surfactant,
D) at least one organic poly acid,
E) at least one synthetic amorphous silica-based rheology modifier,
F) one or more vegetable or mineral oils,
G) optionally further formulation auxiliaries.

2. A herbicide dispersion according to claim 1, wherein A is tembotrione.

3. A herbicide dispersion according to claim 1 wherein B is isoxadifen-ethyl.

4. A herbicide dispersion according to one or more of the preceding claims, wherein the ratio of A) : B) is from 10:1 to 1:1.

5. A herbicide dispersion according to one or more of the preceding claims, wherein D is anhydrous citric acid.

6. A herbicide dispersion according to one or more of the preceding claims, wherein E) is a mixture of a hydrophilic and a hydrophobic synthetic amorphous silica-based rheology modifier.

7. A herbicide dispersion according to one or more of the preceding claims, wherein E) is a mixture of a hydrophilic and a hydrophobic synthetic amorphous silica-based rheology modifier with a ratio from 1:0.5 to 1:6.

8. A herbicide dispersion according to one or more of the preceding claims, wherein C) is at least one surfactant selected from the group of ethoxylated sorbitan esters or blends thereof with at least 50% ethoxylated sorbitan ester.

9. A herbicide dispersion according to one or more of the preceding claims, wherein F) is preferably rapeseed oil methyl ester or a mixture of rapeseed oil methyl ester with a mineral oil.

10. A herbicide dispersion according to one or more of the preceding claims, wherein C) comprises at least one surfactant selected from the group of ethoxylated sorbitan esters or blends thereof with at least 50% ethoxylated sorbitan ester and further at least 2 other surfactants C, wherein the surfactant selected from the group of ethoxylated sorbitan esters or blends thereof with at least 50% ethoxylated sorbitan ester at least provides for 50% of C).

11. A herbicide dispersion according to one or more of the preceding claims, wherein the composition comprises the component by weight in
A) from 3 to 15%,
B) from 1 to 8% ,
C) from 12 to 27%,
D) from 0.5 to 15%,
E) from 0.1 to 7%,
F) from 30 to 80%,
G) from 0 to 5%.

12. A herbicide dispersion according to one or more of the preceding claims, wherein the composition comprises the component by weight in
A) from 4 to 12%,
B) from 2 to 6%,
C) from 14 to 23%,
D) from 0.5 to 12.5%,
E) from 2 to 6%,
F) from 50 to 75%,
G) from 0 to 5%.

13. A herbicide dispersion according to one or more of the preceding claims, wherein the composition comprises the component by weight in
A) from 4 to 10%, wherein A) is preferably tembotrione,
B) from 2 to 5%, wherein B) is preferably isoxadifen-ethyl,
C) from 15 to 22%, wherein C) is preferably at least one surfactant selected from the group of ethoxylated sorbitan esters or blends thereof with at least 50% ethoxylated sorbitan ester
D) from 0.5 to 11%, wherein D) is preferably citric acid, more preferably anhydrous citric acid,
E) from 3 to 5%, wherein E) is preferably a synthetic amorphous silica-based rheology modifier and most preferred a mixture of a hydrophilic and a hydrophobic synthetic amorphous silica-based rheology modifier,
F) from 55 to 75%, wherein F) is preferably rapeseed oil methyl ester or a mixture of rapeseed oil methyl ester with a mineral oil, preferably in a ratio from 2:1 to 6:1, more preferably 3:1 to 4:1, with a maximum of 15% (based on the total composition) of the mineral oil present and a minimum of 0%.
G) from 0 to 5%.

14. A stable homogeneous, redispersible herbicide dispersion without hard sediment formation according to one or more of the preceding claims.

15. The use of the herbicide dispersion according to one or more of the preceding claims, for the preparation of a herbicidal spray broth.

16. A tank mix comprising the herbicide dispersion according to one or more of the preceding claims as well as Flufenacet and Terbuthylazine.

17. The use of a dispersion according to one or more of claims 1 to 14 or of a spray broth according to claim 15 or of a tank mix according to claim 16 for controlling undesired vegetation in corn.

18. A method of controlling undesired vegetation, wherein an effective amount of a use of a dispersion according to one or more of claims 1 to 14 or of a spray broth according to claim 15 or of a tank mix according to claim 16 is applied to the plants, parts of the plants, the seed or the area in which the plants grow.
